# EUROPEAN PATENT SPECIFICATION

(11) **EP 2 933 098 B1**
(45) Date of publication and mention of the grant of the patent: **02.08.2017**
(21) Application number: 13864076.8
(22) Date of filing: 13.12.2013
(51) Int. Cl.: B32B 25/08, B32B 27/30, B32B 27/34, B60C 1/00, B60C 5/14, C08K 5/09, C08K 5/3492, C08L 7/00, C08L 9/06, C08L 61/10, C08L 61/14

(54) **LAMINATE, INNER LINER FOR TIRE, AND PNEUMATIC TIRE**
LAMINAT, INNENAUSKLEIDUNG FÜR REIFEN UND LUFTREIFEN
STRATIFIÉ, CALANDRAGE INTÉRIEUR POUR PNEUMATIQUE ET PNEUMATIQUE

(30) Priority: 17.12.2012 JP 2012274848
(43) Date of publication of application: 21.10.2015
(73) Proprietor: The Yokohama Rubber Co., Ltd., Minato-ku Tokyo 105-8685 (JP)
(72) Inventor: SHIBATA, Hirokazu, Hiratsuka-shi Kanagawa 254-8601 (JP)
(74) Representative: Hoffmann Eitle
(86) International application number: PCT/JP2013/083496
(87) International publication number: WO 2014/097994

(56) References cited:
- JP-A- 2012 082 323
- JP-A- 2012 177 071
- US-A1- 2011 054 109
- DATABASE WPI Week 201155 Thomson Scientific, London, GB; AN 2011-K47772 XP002759048, -& JP 2011 157525 A (YOKOHAMA RUBBER CO LTD) 18 August 2011 (2011-08-18)

## Description

### Technical Field

The present invention relates to a laminate of a film of a thermoplastic resin composition and a layer of a rubber composition, an inner liner for tire consisting of the laminate, and a pneumatic tire comprising the inner liner. More specifically, the present invention relates to a laminate having improved adhesion strength between a film of a thermoplastic resin composition and a layer of a rubber composition and further having excellent adhesion properties to other rubbers that constitute a tire, an inner liner for tire consisting of the laminate, and a pneumatic tire comprising the inner liner.

### Background Art

The present inventor previously proposed increasing the adhesion strength at the interface between a film of a thermoplastic resin or thermoplastic elastomer composition and a layer of a rubber composition in a laminate of the film of the thermoplastic resin or thermoplastic elastomer composition and the layer of the rubber composition by blending the rubber composition with a condensate having a phenolic structure and a basic component which generates formaldehyde, at a specific blending ratio, and adjusting the blending of sulfur and a vulcanization accelerator (Patent Document 1).

### Citation List

### Patent Document

Patent Document 1: Japanese Unexamined Patent Publication No. 2012-177071

### Summary of Invention

### Technical Problem

The present inventor has made an intensive study with the aim of further improving the adhesion strength between a film of a thermoplastic resin composition and a layer of a rubber composition and to further improve the adhesion properties to other rubber members that constitute a tire, and as a result has found that such an aim can be achieved by the addition of a specific amount of a specific aromatic carboxylic acid, and consequently have completed the present invention.

The present invention makes it possible, in a pneumatic tire comprising a laminate of a film of a thermoplastic resin composition and a layer of a rubber composition as an inner liner material, to improve the adhesion strength between the film of the thermoplastic resin composition and other rubber components that constitute the tire.

### Solution to Problem

According to the present invention, a laminate of a film of a thermoplastic resin composition and a layer of a rubber composition is provided, wherein the rubber composition comprises
(a) a rubber component,
(b) 0.5 to 20 parts by weight per 100 parts by weight of the rubber component of a condensate of a compound represented by formula (1): 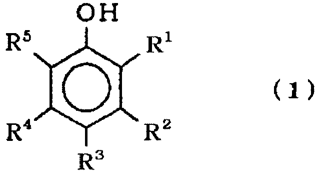 wherein R¹, R², R³, R⁴ and R⁵ are independently selected from hydrogen, hydroxyl group, alkyl groups having 1 to 8 carbon atoms and ethers having 1 to 8 carbon atoms, with formaldehyde,
(c) 0.25 to 200 parts by weight per 100 parts by weight of the rubber component of a methylene donor,
(d) a vulcanizing agent, and
(e) 0.5 to 5 parts by weight per 100 parts by weight of the rubber component of an unsubstituted or substituted aromatic carboxylic acid having a pKa of 1.5 to 4.0,
wherein a weight ratio of the methylene donor to the condensate is 0.5 to 10.

According to the present invention, an inner liner for pneumatic tire comprising the laminate described above is further provided.

According to the present invention, a pneumatic tire in which the laminate described above is used as an inner liner material is further provided.

More specifically, the present invention includes the following embodiments [1] to [10].
[1] A laminate of a film of a thermoplastic resin composition and a layer of a rubber composition, wherein the rubber composition comprises
   (a) a rubber component,
   (b) 0.5 to 20 parts by weight per 100 parts by weight of the rubber component of a condensate of a compound represented by formula (1): 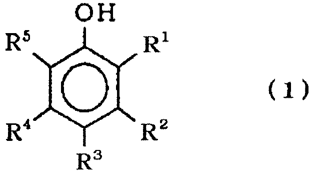 wherein R¹, R², R³, R⁴ and R⁵ are independently selected from hydrogen, hydroxyl group, alkyl groups having 1 to 8 carbon atoms and ethers having 1 to 8 carbon atoms, with formaldehyde,
   (c) 0.25 to 200 parts by weight per 100 parts by weight of the rubber component of a methylene donor,
   (d) a vulcanizing agent, and
   (e) 0.5 to 5 parts by weight per 100 parts by weight of the rubber component of an unsubstituted or substituted aromatic carboxylic acid having a pKa of 1.5 to 4.0,
   wherein a weight ratio of the methylene donor to the condensate is 0.5 to 10.
[2] The laminate according to Embodiment [1] above, wherein the unsubstituted or substituted aromatic carboxylic acid is at least one selected from salicylic acid, 4-aminosalicylic acid, benzoic acid, o-aminobenzoic acid, and 2,4-dihydroxybenzoic acid.
[3] The laminate according to Embodiment [1] or [2] above, wherein the thermoplastic resin composition comprises at least one thermoplastic resin selected from the group consisting of poly(vinyl alcohol), ethylene-vinyl alcohol copolymer, nylon 6, nylon 66, nylon 11, nylon 12, nylon 610, nylon 612, nylon 6/66, nylon MXD6, and nylon 6T.
[4] The laminate according to any one of Embodiments [1] to [3] above, wherein the thermoplastic resin composition further comprises at least one elastomer component selected from the group consisting of brominated isobutylene-*p*-methylstyrene copolymer, maleic anhydride-modified ethylene-*α*-olefin copolymers, ethylene-glycidyl methacrylate copolymer, and maleic anhydride-modified ethylene-ethyl acrylate copolymer, wherein said at least one elastomer component is dispersed in at least one thermoplastic resin component selected from the group consisting of polyvinyl alcohol, ethylene-vinyl alcohol copolymer, nylon 6, nylon 66, nylon 11, nylon 12, nylon 610, nylon 612, nylon 6/66, nylon MXD6, and nylon 6T.
[5] The laminate according to any one of Embodiments [1] to [4] above, wherein the methylene donor is at least one selected from the group consisting of modified etherified methylolmelamines, paraformaldehyde, hexamethylenetetramine, pentamethylenetetramine, and hexamethoxymethylmelamine.
[6] The laminate according to any one of Embodiments [1] to [5] above, wherein the rubber component is selected from natural rubber, styrene butadiene rubber, or a combination thereof.
[7] The laminate according to any one of Embodiments [1] to [6] above, wherein the condensate is represented by formula (2): 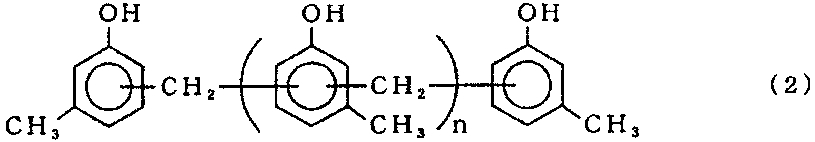 wherein n is an integer of 1 to 20.
[8] The laminate according to any one of Embodiments 1 to 6, wherein the condensate is represented by formula (3): 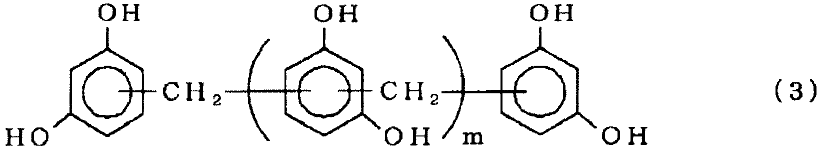 wherein m is an integer of 1 to 20.
[9] An inner liner material for pneumatic tire, consisting of the laminate according to any one of Embodiments [1] to [8] above.
[10] A pneumatic tire using as an inner liner material the laminate according to any one of Embodiments [1] to [8] above.

### Description of Embodiments

Examples of thermoplastic resins that can constitute the thermoplastic resin composition in the laminate of a film of a thermoplastic resin composition and a layer of a rubber composition, include polyamide resins, polyester resins, polynitrile resins, polymethacrylate resins, polyvinyl resin, cellulose resins, fluoro resins, imide resins, polystyrene resins, polyolefin resins, etc. Examples of polyamide resins include nylon 6 (N6), nylon 66 (N66), nylon 46 (N46), nylon 11 (N11), nylon 12 (N12), nylon 610 (N610), nylon 612 (N612), nylon 6/66 (N6/66), nylon 6/66/12 (N6/66/12), nylon 6/66/610 (N6/66/610), nylon MXD6 (MXD6), nylon 6T, nylon 6/6T, nylon 9T, nylon 66/PP copolymers, nylon 66/PPS copolymers, etc. Examples of polyester resins include aromatic polyesters, such as poly(butylene terephthalate) (PBT), poly(ethylene terephthalate) (PET), poly(ethylene isophthalate) (PEI), PET/PEI copolymers, polyarylate (PAR), poly(butylene naphthalate) (PBN), liquid crystal polyesters, polyoxyalkylene diimidic acid/polybutyrate-terephthalate copolymers, etc. Examples of polynitrile resins include polyacrylonitrile (PAN), polymethacrylonitrile, acrylonitrile/styrene copolymers (AS), methacrylonitrile/styrene copolymers, methacrylonitrile/styrene/butadiene copolymers, etc. Examples of polymethacrylate resins include poly(methyl methacrylate) (PMMA), poly(ethyl methacrylate), etc. Examples of polyvinyl resins include poly(vinyl acetate) (PVAc), poly(vinyl alcohol) (PVA), ethylene-vinyl alcohol copolymers (EVOH), poly(vinylidene chloride) (PVDC), poly(vinyl chloride) (PVC), vinyl chloride/vinylidene chloride copolymers, vinylidene chloride/methyl acrylate copolymers, etc. Examples of cellulose resins include cellulose acetate, cellulose acetate butyrate, etc. Examples of fluoro resins include poly(vinylidene fluoride) (PVDF), poly(vinyl fluoride) (PVF), polychlorofluoroethylene (PCTFE), tetrafluoroethylene/ethylene copolymers (ETFE), etc. Examples of imide resins include aromatic polyimides (PI), etc. Examples of polystyrene resins include polystyrene (PS), etc. Examples of polyolefin resins include polyethylene (PE), polypropylene (PP), etc. Among them, preferred are poly(vinyl alcohol), ethylene-vinyl alcohol copolymers, nylon 6, nylon 66, nylon 11, nylon 12, nylon 610, nylon 612, nylon 6/66, nylon MXD6, and nylon 6T, in view of satisfying both fatigue resistance and air barrier properties.

In order to improve processability, dispersibility, heat resistance, oxidation resistance, etc., the thermoplastic resin composition may contain compounding ingredients that are generally compounded into a resin composition, such as a filler, a reinforcing agent, a processing aid, a stabilizer, and an antioxidant, to the extent that the effects of the present invention are not impaired. Although it is preferable not to add a plasticizer in view of air barrier properties and heat resistance, it may be added to the extent that the effects of the present invention are not impaired.

The thermoplastic resin composition may further comprise an elastomer component. When the thermoplastic resin composition further comprises an elastomer component, the thermoplastic resin composition is in the form of a thermoplastic elastomer composition in which the thermoplastic resin component constitutes a matrix phase and the elastomer component constitutes a dispersed phase. Examples of the elastomer component include diene rubbers and hydrogenated products thereof, olefin rubbers, halogen-containing rubbers, silicone rubbers, sulfur-containing rubbers, fluoro rubbers, etc. Examples of diene rubbers and hydrogenated products thereof include natural rubber (NR), isoprene rubbers (IR), epoxidized natural rubbers, styrene-butadiene rubbers (SBR), butadiene rubbers (BR) (high-cis BR and low-cis BR), acrylonitrile butadiene rubbers (NBR), hydrogenated NBR, hydrogenated SBR, etc. Examples of olefin rubbers include ethylene propylene rubbers (EPM), ethylene propylene diene rubbers (EPDM), maleic acid-modified ethylene propylene rubbers (M-EPM), maleic anhydride-modified ethylene-*α*-olefin copolymers, ethylene-glycidyl methacrylate copolymers, maleic anhydride-modified ethylene-ethyl acrylate copolymers (modified EEA), butyl rubbers (IIR), copolymers of isobutylene and an aromatic vinyl or diene monomer, acrylic rubbers (ACM), ionomers, etc. Examples of halogen-containing rubbers include halogenated butyl rubbers such as brominated butyl rubbers (Br-IIR) and chlorinated butyl rubber (Cl-IIR), brominated isobutylene-*p*-methyl styrene copolymer (BIMS), halogenated isobutylene-isoprene copolymer rubbers, chloroprene rubbers (CR), hydrin rubbers (CHR), chlorosulfonated polyethylenes (CSM), chlorinated polyethylenes (CM), maleic acid-modified chlorinated polyethylenes (M-CM), etc. Examples of silicone rubbers include methyl vinyl silicone rubber, dimethyl silicone rubber, methyl phenyl vinyl silicone rubber, etc. Examples of sulfur-containing rubbers include polysulfide rubbers, etc. Examples of fluoro rubbers include vinylidene fluoride rubbers, fluorine-containing vinyl ether rubbers, tetrafluoroethylene-propylene rubbers, fluorine-containing silicone rubbers, fluorine-containing phosphazene rubbers, etc. Among them, brominated isobutylene-*p*-methylstyrene copolymers, maleic anhydride-modified ethylene-*α*-olefin copolymers, ethylene-glycidyl methacrylate copolymers, and maleic anhydride-modified ethylene-ethyl acrylate copolymers are preferred in view of air barrier properties.

The thermoplastic resin composition may contain various additives to the extent that the effects of the present invention are not impaired. When the thermoplastic resin composition comprises an elastomer component, compounding ingredients that are generally compounded into a rubber composition, such as carbon black, silica, and the other reinforcing agents (fillers), softening agents, age resisters, processing aids, etc., may be compounded into the elastomer component, to the extent that the effects of the present invention are not impaired.

Combinations of the elastomer component and the thermoplastic resin component that can constitute the thermoplastic resin composition in the laminate of the present invention, include, but not limited to, a halogenated butyl rubber and a polyamide resin, a brominated isobutylene-*p*-methylstyrene copolymer rubber and a polyamide resin, a butadiene rubber and a polystyrene resin, an isoprene rubber and a polystyrene resin, a hydrogenated butadiene rubber and a polystyrene resin, an ethylene propylene rubber and a polyolefin resin, an ethylene propylene diene rubber and a polyolefin resin, an amorphous butadiene rubber and a syndiotactic poly(1,2-polybutadiene), an amorphous isoprene rubber and *trans*-poly(1,4-isoprene), a fluoro rubber and a fluoro resin, etc., and a combination of a butyl rubber and a polyamide resin superior in air barrier properties is preferred, and among others combinations of a brominated isobutylene-p-methylstyrene copolymer rubber which is a modified butyl rubber, and nylon 6/66, nylon 6 or a blend resin of nylon 6/66 and nylon 6 are especially preferred in view of satisfying both fatigue resistance and air barrier properties.

A thermoplastic elastomer composition can be produced by melt-kneading a thermoplastic resin component and an elastomer component with, for example, a twinscrew kneading extruder, etc., to disperse the elastomer component as a dispersed phase into the thermoplastic resin component which forms a matrix phase. The weight ratio of the thermoplastic resin component to the elastomer component is preferably, but not limited to, from 10/90 to 90/10, and more preferably from 15/85 to 90/10.

The rubber composition which constitutes the layer of the rubber composition comprises:
(a) a rubber component,
(b) 0.5 to 20 parts by weight per 100 parts by weight of the rubber component of a condensate of a compound represented by formula (1): 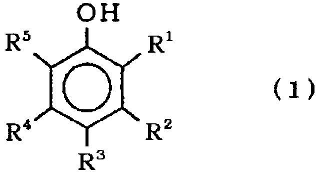 wherein R¹, R², R³, R⁴ and R⁵ are independently selected from hydrogen, hydroxyl group, alkyl groups having 1 to 8 carbon atoms and ethers having 1 to 8 carbon atoms, with formaldehyde,
(c) 0.25 to 200 parts by weight per 100 parts by weight of the rubber component of a methylene donor,
(d) a vulcanizing agent, and
(e) 0.5 to 5 parts by weight per 100 parts by weight of the rubber component of an unsubstituted or substituted aromatic carboxylic acid having a pKa of 1.5 to 4.0,
wherein a weight ratio of the methylene donor to the condensate is 0.5 to 10.

Examples of the rubber component include diene rubbers and hydrogenated products thereof, olefin rubbers, halogen-containing rubbers, silicone rubbers, sulfur-containing rubbers, fluoro rubbers, etc. Examples of diene rubbers and hydrogenated products thereof include natural rubber (NR), isoprene rubbers (IR), epoxidized natural rubbers, styrene-butadiene rubbers (SBR), butadiene rubbers (BR) (high-cis BR and low-cis BR), acrylonitrile butadiene rubbers (NBR), hydrogenated NBR, hydrogenated SBR, etc. Examples of olefin rubbers include ethylene propylene rubbers (EPM), ethylene propylene diene rubbers (EPDM), maleic acid-modified ethylene propylene rubbers (M-EPM), maleic anhydride-modified ethylene-*α*-olefin copolymers, ethylene-glycidyl methacrylate copolymers, maleic anhydride-modified ethylene-ethyl acrylate copolymers (modified EEA), butyl rubbers (IIR), copolymers of isobutylene and an aromatic vinyl or diene monomer, acrylic rubbers (ACM), ionomers, etc. Examples of halogen-containing rubbers include halogenated butyl rubbers such as brominated butyl rubbers (Br-IIR) and chlorinated butyl rubbers (Cl-IIR), brominated isobutylene-*p*-methyl styrene copolymers (BIMS), halogenated isobutylene-isoprene copolymer rubbers, chloroprene rubbers (CR), hydrin rubbers (CHR), chlorosulfonated polyethylenes (CSM), chlorinated polyethylenes (CM), maleic acid-modified chlorinated polyethylenes (M-CM), etc. Examples of silicone rubbers include methyl vinyl silicone rubber, dimethyl silicone rubber, methyl phenyl vinyl silicone rubber, etc. Examples of sulfur-containing rubbers include polysulfide rubbers, etc. Examples of fluoro rubbers include vinylidene fluoride rubbers, fluorine-containing vinyl ether rubbers, tetrafluoroethylene-propylene rubbers, fluorine-containing silicone rubbers, fluorine-containing phosphazene rubbers, etc. Among them, diene rubbers, olefin rubbers and halogen-containing rubbers are preferred, and more preferred are natural rubber, styrene-butadiene rubbers, butadiene rubbers, brominated butyl rubbers, ethylene-propylene-diene rubbers, in view of properties of co-crosslinking with an adjacent rubber material. The rubber component may be a mixture of two or more rubber components.

A preferred example of the compound represented by formula (1) is one in which at least one of R¹, R², R³, R⁹ and R⁵ is an alkyl group having 1 to 8 carbon atoms and the remainder are hydrogen. A specific preferred example of the compound represented by formula (1) is cresol.

Another preferred example of the compound represented by formula (1) is one in which at least one of R¹, R², R³, R⁴ and R⁵ is a hydroxyl group and the remainder are hydrogen or an alkyl group having 1 to 8 carbon atoms. Another specific preferred example of the compound represented by formula (1) is resorcin.

Examples of the condensate of the compound represented by formula (1) with formaldehyde include cresol-formaldehyde condensate, resorcin-formaldehyde condensate, etc. These condensates may be modified to the extent that the effects of the present invention are not impaired. For example, a resorcin-formaldehyde condensate modified with an epoxy compound may also be used in the present invention. Such condensates are commercially available, and the commercial products can be used in the present invention.

A condensate of the compound represented by formula (1) with formaldehyde is preferably a compound represented by formula (2) or (3):

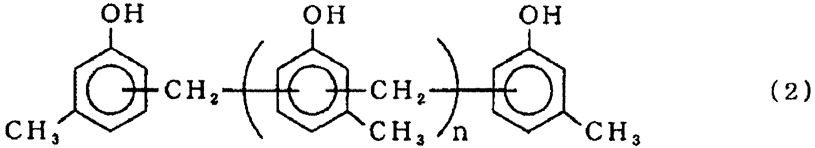

wherein n is an integer of 1 to 20, preferably an integer of 1 to 10, and more preferably an integer of 1 to 5; 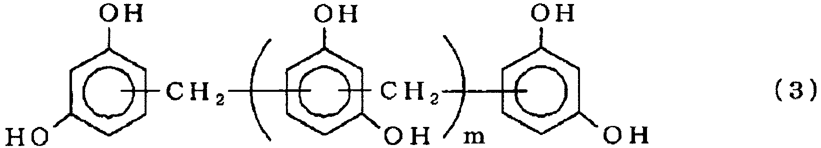 wherein m is an integer of 1 to 20, preferably an integer of 1 to 10, and more preferably an integer of 1 to 3.

The "methylene donor" refers to a basic compound, which generates formaldehyde upon heating, etc., and includes, for example, hexamethylenetetramine, pentamethylenetetramine, hexamethylenediamine, methylolmelamine, etherified methylolmelamine, modified etherified methylolmelamines, esterified methylolmelamine, hexamethoxymethylolmelamine, hexamethylolmelamine, hexakis(ethoxymethyl)melamine, hexakis(methoxymethyl)melamine, *N*,*N'*,*N"*-trimethyl-*N,N',N"*-trimethylolmelamine, *N*,*N'*,*N"-*trimethylolmelamine, *N*-methylolmelamine, *N,N'*-bis(methoxymethyl)melamine, *N,N',N"*-tributyl-*N,N',N"*-trimethylolmelamine, paraformaldehyde, etc. Among them, modified etherified methylolmelamines are preferred in view of the formaldehyde-releasing temperature.

Examples of the vulcanizing agent include inorganic vulcanizing agents and organic vulcanizing agents. Examples of inorganic vulcanizing agents include sulfur, sulfur monochloride, selenium, tellurium, zinc oxide, magnesium oxide, lead monoxide, etc., and examples of organic vulcanizing agents include sulfur-containing organic compounds, salts of dithiocarbamic acid, oximes, tetrachloro-*p*-benzoquinone, dinitroso compounds, modified phenolic resins, polyamines, organic peroxides, etc. Among them, sulfur, organic peroxides such as 1,3-bis-(t-butylperoxyisopropyl)-benzene, modified phenolic resins such as brominated alkylphenol-formaldehyde condensates, zinc oxide, and sulfur-containing organic compounds are preferred.

The compounding amount of the condensate of the compound represented by formula (1) with formaldehyde (hereinafter also referred to simply as "condensate") is 0.5 to 20 parts by weight, and preferably 1 to 10 parts by weight, per 100 parts by weight of the rubber component. If the compounding amount of the condensate is too small, the heat amount and time required to achieve a good adhesion are increased, thereby impairing the vulcanization efficiency. Conversely, if the compounding amount of the condensate is too much, the resulting rubber composition has a decreased elongation after vulcanization, and therefore is more likely to be broken.

The amount of the methylene donor is 0.25 to 200 parts by weight, preferably 0.5 to 80 parts by weight, and more preferably 1 to 40 parts by weight, per 100 parts by weight of the rubber component. If the compounding amount of the methylene donor is too small, the donor is consumed by the resin reaction in the rubber composition system and a reaction in terms of an interface reaction ceases to proceed, thereby impairing the adhesion. Conversely, if the compounding amount of the methylene donor is too much, the reaction in the rubber composition system may be accelerated too much, or a crosslinking reaction in the resin system to be adhered may be caused, thereby impairing the adhesion.

The weight ratio of the methylene donor to the condensate is from 0.5 to 10, preferably from 1 to 4, and more preferably from 1 to 3. If this ratio is too low, the donor is consumed by the resin reaction in the rubber composition system and a reaction in terms of an interface reaction ceases to proceed, thereby impairing the adhesion. Conversely, if the ratio is too high, the reaction in the rubber composition system may be accelerated too much, or a crosslinking reaction in the resin system to be adhered may be caused, thereby impairing the adhesion.

If the rubber component comprises a diene rubber and the vulcanizing agent is sulfur, it is preferable that the rubber composition does not contain a vulcanization accelerator. If the rubber component comprises a diene rubber, the vulcanizing agent is sulfur, and the rubber component contains a vulcanization accelerator, it is preferable that the compounding amount of the condensate is more than 3 parts by weight and not more than 20 parts by weight, per 100 parts by weight of the rubber component, and the compounding amount of the methylene donor is preferably more than 1.5 parts by weight and not more than 200 parts by weight, more preferably more than 3 parts by weight and not more than 80 parts by weight, per 100 parts by weight of the rubber component. If the compounding amount of the condensate is too small, the condensate reacts with the vulcanization accelerator and the reaction with a resin at the interface ceases to proceed. If the compounding amount of the condensate is too much, the resulting rubber composition has a decreased elongation after vulcanization, and therefore is more likely to be broken. If the compounding amount of the methylene donor is too small, the donor is consumed by the resin reaction in the rubber composition system and a reaction in terms of an interface reaction ceases to proceed, thereby impairing the adhesion. Conversely, if the compounding amount of the methylene donor is too much, the reaction in the rubber composition system may be excessively accelerated, or a crosslinking reaction in the resin system to be adhered may be caused, thereby impairing the adhesion.

Examples of the vulcanization accelerator include those of aldehyde-ammonia type, aldehyde-amine type, thiourea type, guanidine type, thiazole type, sulfenamide type, thiuram type, dithiocarbamic acid salt type, and xanthogenic acid salt type, and preferred are thiazole type, sulfenamide type, and thiuram type.

Thiazole type vulcanization accelerators are compounds having thiazole structure, and include, for example, di-2-benzothiazolyldisulfide, mercaptobenzothiazole, benzothiazyldisulfide, mercaptobenzothiazole zinc salt, (dinitrophenyl)mercaptobenzothiazole, and *(N,N-*diethylthiocarbamoylthio)benzothiazole, etc., and among them, di-2-benzothiazolyldisulfide is preferred.

Sulfenamide type vulcanization accelerators are compounds having sulfenamide structure, and include, for example, *N*-cyclohexylbenzothiazole sulfenamide, *N-t-*butylbenzothiazole sulfenamide, *N-*oxydiethylenebenzothiazole sulfenamide, *N,N-*dicyclohexylbenzothiazole sulfenamide, (morpholinodithio)benzothiazole, etc., and among them, *N-t*-butyl-2-benzothiazole sulfenamide is preferred.

Thiuram type vulcanization accelerators are compound having thiuram structure, and include, for example, tetrakis(2-ethylhexyl)thiuram disulfide, tetramethylthiuram disulfide, tetramethylthiuram monosulfide, tetraethylthiuram disulfide, tetrabutylthiuram disulfide, dipentamethylenethiuram hexasulfide, etc., and among them, tetrakis(2-ethylhexyl)thiuram disulfide is preferred.

If the rubber component comprises a diene rubber, the vulcanizing agent is sulfur, the rubber component further contains a vulcanization accelerator, the compounding amount of the condensate is from 0.5 to 3 parts by weight per 100 parts by weight of the rubber component, and the compounding amount of the methylene donor is 0.25 to 30 parts by weight per 100 parts by weight of the rubber component, it is preferable that the compounding amount of sulfur is less than 4 parts by weight per 100 parts by weight of the rubber component, and the compounding amount of the vulcanization accelerator is more than 0 part by weight and less than 2.1 parts by weight per 100 parts by weight of the rubber component. If the compounding amount of sulfur is too much, the reaction of the condensate in the rubber composition system proceeds competitively, thereby impairing the adhesion. If a vulcanization accelerator is not added in the above amount, the vulcanization reaction is hard to proceed, thereby impairing the vulcanization efficiency. Conversely, if the compounding amount of the vulcanization accelerator is too much, the condensate reacts with the vulcanization accelerator and the reaction of the condensate with a resin at the interface ceases to proceed.

In this case, if the vulcanization accelerator is a compound having sulfenamide structure, the compounding amount of the compound having sulfenamide structure is preferably more than 0 part by weight and less than 1.5 parts by weight. If the compound having sulfenamide structure is not added in the compounding amount, a vulcanization reaction is hard to proceed, thereby impairing the vulcanization efficiency. Conversely, if the compounding amount of the compound having sulfenamide structure is too much, the reaction of the accelerator competes with the reaction of a resin, thereby preventing an adhesion reaction.

In this case, if the rubber composition contains as vulcanization accelerators a compound having sulfenamide structure and a compound having thiuram structure, the compounding amount of the compound having thiuram structure is preferably more than 0 part by weight and less than 0.6 part by weight. If the compound having thiuram structure is not compounded, the compounding amount of sulfur is likely to have an effect on the adhesion. Conversely, if the compounding amount of the compound having thiuram structure is too much, sulfur is released, thereby preventing an adhesion reaction.

The rubber component preferably comprises a diene rubber. Examples of diene rubbers include natural rubber (NR), isoprene rubbers (IR), styrene-butadiene rubbers (SBR), butadiene rubbers (BR), acrylonitrile-butadiene rubbers (NBR), etc. Among them, natural rubber, styrene-butadiene rubbers, butadiene rubbers, isoprene rubbers, and a mixture thereof are preferred in view of properties of co-crosslinking with an adjacent rubber material. The proportion of the diene rubber in the rubber component is preferably 50% by weight or higher, more preferably 70% by weight or higher, and it is more preferable that the rubber component is entirely a diene rubber.

More preferably, the rubber component comprises a butadiene rubber. Further, 10 to 100% by weight of the rubber component is preferably a butadiene rubber, more preferably 50 to 98% by weight of the rubber component is a butadiene rubber, and still more preferably 70 to 95% by weight of the rubber component is a butadiene rubber. If the rubber component comprises a rubber component other than butadiene rubber, the rubber component other than butadiene rubber is preferably natural rubber or isoprene rubber. In other words, the rubber component is especially preferably comprised of a combination of butadiene rubber and natural rubber or a combination of butadiene rubber and isoprene rubber is especially preferred.

A combination of a film comprising an ethylene-vinyl alcohol copolymer and a rubber composition comprising a condensate of a compound represented by formula (1), in which at least one of R¹, R², R³, R⁴ and R⁵ is hydroxyl group and the remainder are hydrogen or an alkyl group having 1 to 8 carbon atoms, with formaldehyde, is especially preferred, since the adhesion properties at the interface between the film and the layer of the rubber composition is extremely good. A film comprising an ethylene-vinyl alcohol copolymer herein means a film of a thermoplastic resin composition in which the thermoplastic resin is an ethylene-vinyl alcohol copolymer. The amount of the ethylene-vinyl alcohol copolymer is preferably 5 to 100% by weight, and more preferably 20 to 70% by weight, based on the total amount of the thermoplastic resin component of the thermoplastic resin composition.

Ethylene-vinyl alcohol copolymer (hereinafter also referred to as "EVOH") is a copolymer composed of ethylene units (-CH₂CH₂-) and vinyl alcohol units (-CH₂-CH(OH)-), and in addition to the ethylene units and the vinyl alcohol units, it may contain other constituent units to the extent that the effects of the present invention should are not impaired. An ethylene-vinyl alcohol copolymer having an ethylene unit content, namely an ethylene content of preferably 5 to 55 mol%, and more preferably 20 to 50 mol% is used. An ethylene-vinyl alcohol copolymer having too low an ethylene content has a poor compatibility with a polyamide resin. Conversely, if the ethylene content is too high, the number of the hydroxyl groups contained in the thermoplastic resin is decreased, and consequently an improvement in adhesion force cannot be expected. The ethylene-vinyl alcohol copolymer is a saponified product of an ethylene-vinyl acetate copolymer, and the degree of saponification thereof is preferably 90% or higher, and more preferably 99% or higher. An ethylene-vinyl alcohol copolymer having too low a degree of saponification leads to a decrease in air barrier properties and a decrease in thermal stability. Ethylene-vinyl alcohol copolymers are commercially available, and are available under the trade name of Soarnol^{™} from The Nippon Synthetic Chemical Industry Co., Ltd. and under the trade name of Eval^{™} from Kuraray Co., Ltd. Examples of ethylene-vinyl alcohol copolymers having an ethylene unit content of 5 to 55 mol% include Soarnol^{™} H4815B (ethylene unit content of 48 mol%), Soarnol^{™} A4412B (ethylene unit content of 42 mol%), Soarnol^{™} DC3212B (ethylene unit content of 32 mol%), and Soarnol^{™} V2504RB (ethylene unit content of 25 mol%) from The Nippon Synthetic Chemical Industry Co., Ltd., and Eval^{™} L171B (ethylene unit content of 27 mol%), Eval^{™} H171B (ethylene unit content of 38 mol%), and Eval^{™} E171B (ethylene unit content of 44 mol%) from Kuraray Co., Ltd.

Examples of the unsubstituted or substituted aromatic carboxylic acid having a pKa of 1.5 to 4.0 include benzoic acid and derivatives thereof, for example, salicylic acid (o-hydroxybenzoic acid), 4-aminosalicylic acid, o-aminobenzoic acid, and 2,4-dihydroxybenzoic acid, and one of them may be used, or two or more of them may be used in combination. The amount of the unsubstituted or substituted aromatic carboxylic acid having a pKa of 1.5 to 4.0 is 0.5 to 5 parts by weight per 100 parts by weight of the rubber component.

The laminate according to the present invention can be produced by overlaying the rubber composition on a film of a thermoplastic resin. More particularly, but without intention to limit thereto, it can be produced in the following manner. Firstly, a thermoplastic resin composition is formed into a film by a forming machine, such as a blown film extrusion device, a T-die extruder, etc., to produce a film of the thermoplastic resin composition. Next, the rubber composition is extruded by a T-die extruder, etc., onto the film and simultaneously laminated with the film to produce a laminate.

A pneumatic tire can be produced by a conventional process using a laminate according to the present invention. For example, a laminate according to the present invention as an inner liner material is placed on a tire molding drum so that the thermoplastic resin or thermoplastic elastomer composition film side faces toward the tire molding drum, and members that are usually used for the production of a tire, such as carcass layer, belt layer, tread layer, etc., each comprising a unvulcanized rubber, are sequentially overlaid in this order onto the laminate. After molding, the drum is pulled out to obtain a green tire, and subsequently, the green tire is heated and vulcanized in accordance with a conventional method to produce a pneumatic tire.

### Examples

### (1) Production of Film

Raw materials were compounded at the compounding ratio shown in Table 1 to prepare a thermoplastic resin composition, and the thermoplastic resin composition was formed into a film having a thickness of 0.2 mm with a blown film extrusion apparatus. The resulting film is designated as Film A.

**Table 1. Formulation of Film A (parts by weight)**

| | |
|---|---|
| BIMS | 100 |
| Zinc oxide | 0.5 |
| Stearic acid | 0.2 |
| Zinc stearate | 1 |
| Thermoplastic resin | 100 |
| Modified EEA | 10 |
| Plasticizer | 20 |
| Total | 231.7 |

Raw materials of Film A:
BIMS: a brominated isobutylene-*p*-methylstyrene copolymer (Exxpro^{™} 3035 from ExxonMobil Chemical Company)
Zinc Oxide: Zinc white No. 3 from Seido Chemical Industry Co., Ltd.
Stearic acid: Stearic acid for industrial use from Chiba Fatty Acid Co., Ltd.
Zinc stearate: Zinc stearate from NOF Corporation.
Thermoplastic resin: Nylon 6/66 (UBE Nylon^{™} 5033B from Ube Industries, Ltd.)
Modified EEA: Rilsan BESNOTL from Arkea Co.
Plasticizer: BM-4 from Daihachi Chemical Industry Co., Ltd.

### (2) Preparation of Rubber Composition

The following raw materials were compounded at the compounding ratios shown in Tables 2 to 4 with a Banbury mixer to prepare rubber compositions of Examples 1 to 10 and Comparative Examples 1 to 11.
Raw materials of the rubber compositions:
SRR: Nipol 1502 from Zeon Corporation
Natural rubber: SIR-20
Carbon black: Seast V from Tokai Carbon Co., Ltd.
Stearic acid: Stearic acid for industrial use from Chiba Fatty Acid Co., Ltd.
Aromatic oil: Desolex No. 3 from Showa Shell Sekiyu K.K.
Zinc oxide: Zinc white No. 3 by Seido Chemical Industry Co., Ltd.
Cresol-formaldehyde condensate: Sumikanol 610 from Taoka Chemical Co., Ltd.
Modified resorcin-formaldehyde condensate: Sumikanol 620 from Taoka Chemical Co., Ltd.
Methylene donor: Modified etherified methylolmelamine (Sumikanol 507AP from Taoka Chemical Co., Ltd.)
Sulfur: 5% oil extended sulfur from Karuizawa Refinery Inc.
Vulcanization accelerator: di-2-benzothiazolyldisulfide (Nocceler DM from Ouchi-Shinko Chemical Industrial Co., Ltd.)

### (3) Production of Laminate

On top of Film A produced according to (1) above, a rubber composition prepared according to (2) above was extruded with a thickness of 0.7 mm to produce a laminate.

### (4) Evaluation of Laminates

The following "Peel Strength Test", "Tire Separation Test", "Tire Destruction Test" and "Adhesion Test to Metal" were conducted to evaluate the resulting laminates. The evaluation results are shown in Tables 2 to 4. The evaluation methods for the respective evaluation items are as follows.

### [Peel Strength Test]

After vulcanization, a laminate sample was cut to a 25 mm-wide strip, and the peel strength of the resulting strip specimen was measured according to JIS-K6256. The measured peel strength (N/25 mm) was indexed according to the following criteria. Indices other than index 0 fall within an acceptable range.

| Index | Peel Strength (N/25 mm) |
|---|---|
| 0 | 0 or higher and less than 20 |
| 1 | 20 or higher and less than 25 |
| 2 | 25 or higher and less than 50 |
| 3 | 50 or higher and less than 75 |
| 4 | 75 or higher and less than 100 |
| 5 | 100 or higher and less than 200 |
| 6 | 200 or higher |

### [Tire Separation Test]

A tire having a size of 195/65R15 was produced according to a conventional process using the laminate as an inner liner material, and the tire was mounted on a 15×6JJ rim, was set to an internal pressure of 200 kPa, and was mounted on a FF passenger car of 1800 cc displacement, and the car was driven for 30,000 km in an urban area. Thereafter, the tire was removed from the rim and the inner surface thereof was observed to check the presence or absence of a separation failure of the thermoplastic resin laminate used as an inner liner material. A case in which a separation was not observed is indicated with "No", and a case in which a separation was observed is indicated with "Yes".

### [Tire Destruction Test]

A tire having a size of 195/65R15 was produced according to a conventional process using the laminate as an inner liner material, and the tire was mounted on a 15×6JJ rim, was set to an internal pressure of 200 kPa, and was mounted on a FF passenger car of 1800 cc displacement, and the car was driven for 30,000 km in an urban area. Thereafter, the tire was removed from the rim and the inner surface thereof was observed to check the presence or absence of cracks or fissures in the thermoplastic resin laminate used as an inner liner material. A case in which there was no abnormality in appearance is indicated with "No", and a case in which there was an abnormality in appearance is indicated with "Yes". Incidentally, the sign "-" indicates that this test was not conducted in case when a separation was observed in the above "Tire Separation" test.

### [Adhesion Test to Metal]

When the decrease in the total weight of a rubber composition discharged from the Banbury mixer after compounding thereof to the total weight of the raw materials of the rubber composition charged in the Banbury mixer is 10% by weight or higher, the adhesion to metal was evaluated as "Yes", and when the decrease is less than 10% by weight, the adhesion to metal was evaluated as "No".

**Table 2. Formulations and evaluation results for rubber compositions of Comparative Examples 1 to 6**

| | Comparative Example 1 | Comparative Example 2 | Comparative Example 3 | Comparative Example 4 | Comparative Example 5 | Comparative Example 6 |
|---|---|---|---|---|---|---|
| SBR | 50 | 50 | 50 | 50 | 50 | 50 |
| NR | 50 | 50 | 50 | 50 | 50 | 50 |
| Carbon black | 60 | 60 | 60 | 60 | 60 | 60 |
| Stearic acid | 1 | 1 | 1 | 1 | 1 | 1 |
| Aromatic oil | 7 | 7 | 7 | 7 | 7 | 7 |
| Zinc oxide | 3 | 3 | 3 | 3 | 3 | 3 |
| Cresol-formaldehyde condensate | - | 0.4 | 25 | 10 | 1 | 3 |
| Modified resorcin-formaldehyde Condensate | - | - | - | - | - | - |
| Methylene donor | - | 0.4 | 100 | 4 | 11 | 6 |
| Sulfur | 3 | 3 | 3 | 3 | 3 | 2 |
| Vulcanization accelerator | 1 | 1 | 1 | 1 | 1 | 1.5 |
| Peel strength | 0 | 0 | 5 | 0 | 0 | 2 |
| Tire separation | Yes | Yes | No | Yes | Yes | No |
| Tire destruction | - | - | Yes | - | - | No |
| Adhesion to metal | No | No | No | No | No | No |

**Table 3. Formulations and evaluation results for rubber compositions of Examples 1 to 5 and Comparative Examples 7 to 10**

| | Example 1 | Example 2 | Example 3 | Example 4 | Example 5 | Comp. Example 7 | Comp. Example 8 | Comp. Example 9 | Comp. Example 10 |
|---|---|---|---|---|---|---|---|---|---|
| SBR | 50 | 50 | 50 | 50 | 50 | 50 | 50 | 50 | 50 |
| NR | 50 | 50 | 50 | 50 | 50 | 50 | 50 | 50 | 50 |
| Carbon black | 60 | 60 | 60 | 60 | 60 | 60 | 60 | 60 | 60 |
| Stearic acid | 1 | 1 | 1 | 1 | 1 | 1 | 1 | 1 | 1 |
| Aromatic oil | 7 | 7 | 7 | 7 | 7 | 7 | 7 | 7 | 7 |
| Zinc oxide | 3 | 3 | 3 | 3 | 3 | 3 | 3 | 3 | 3 |
| Cresol-formaldehyde condensate | 3 | 3 | 3 | 3 | 3 | 3 | 3 | 3 | 3 |
| Modified-resorcin-formaldehyde condensate | - | - | - | - | - | - | - | - | - |
| Methylene donor | 6 | 6 | 6 | 6 | 6 | 6 | 6 | 6 | 6 |
| 4-Aminosalicylic acid (pKa=1.5) | 2 | - | - | - | - | - | - | - | - |
| o-Aminobenzoic acid (pKa=2.0) | | 2 | | - | - | - | - | - | - |
| Salicylic acid (pKa=2.7) | - | - | 2 | - | - | - | - | - | 6 |
| 2,4-Dihydroxybenzoic acid (pKa=3.2) | - | - | - | 2 | - | - | - | - | - |
| Benzoic acid (pKa=4.0) | - | - | - | - | 2 | - | - | - | - |
| L-Ascorbic acid (pKa=4.2) | - | - | - | - | - | 2 | - | - | - |
| 3,4-Dihydroxybenzoic acid (pKa=4.3) | - | - | - | - | - | - | 2 | - | - |
| Phenylpropionic acid (pKa=4.4) | - | - | - | - | - | - | - | 2 | - |
| Sulfur | 2 | 2 | 2 | 2 | 2 | 2 | 2 | 2 | 5 |
| Vulcanization accelerator | 1.5 | 1.5 | 1.5 | 1.5 | 1.5 | 1.5 | 1.5 | 1.5 | 1.5 |
| Peel strength | 4 | 4 | 4 | 4 | 4 | 2 | 2 | 2 | 4 |
| Tire separation | No | No | No | No | No | No | No | No | No |
| Tire destruction | No | No | No | No | No | No | No | No | No |
| Adhesion to metal | No | No | No | No | No | No | No | No | Yes |

**Table 4. Formulations and evaluation results for rubber compositions of Examples 6 to 10 and Comparative Example 11**

| | Example 6 | Example 7 | Example 8 | Example 9 | Example 10 | Comp. Example 11 |
|---|---|---|---|---|---|---|
| SBR | 50 | 50 | 50 | 50 | 50 | 50 |
| NR | 50 | 50 | 50 | 50 | 50 | 50 |
| Carbon black | 60 | 60 | 60 | 60 | 60 | 60 |
| Stearic acid | 1 | 1 | 1 | 1 | 1 | 1 |
| Aromatic oil | 7 | 7 | 7 | 7 | 7 | 7 |
| Zinc oxide | 3 | 3 | 3 | 3 | 3 | 3 |
| Cresol-formaldehyde condensate | - | - | - | - | - | - |
| Modified-resorcin-formaldehyde condensate | 2 | 2 | 2 | 2 | 2 | 2 |
| Methylene donor | 4 | 4 | 4 | 4 | 4 | 4 |
| 4-Aminosalicylic acid (pKa=1.5) | 2 | - | - | - | - | - |
| o-Aminobenzoic acid (pKa=2.0) | - | 2 | - | - | - | - |
| Salicylic acid (pKa=2.7) | - | - | 2 | - | - | 6 |
| 2,4-Dihydroxybenzoic acid (pKa=3.2) | - | - | - | 2 | - | - |
| Benzoic acid (pKa=4.0) | - | - | - | - | 2 | - |
| L-Ascorbic acid (pKa=4.2) | - | - | - | - | - | - |
| 3,4-Dihydroxybenzoic acid (pKa=4.3) | - | - | - | - | - | - |
| Phenylpropionic acid (pKa=4.4) | - | - | - | - | - | - |
| Sulfur | 2 | 2 | 2 | 2 | 2 | 5 |
| Vulcanization accelerator | 1.5 | 1.5 | 1.5 | 1.5 | 1.5 | 1.5 |
| Peel strength | 6 | 6 | 6 | 6 | 6 | 6 |
| Tire separation | No | No | No | No | No | No |
| Tire destruction | No | No | No | No | No | No |
| Adhesion to metal | No | No | No | No | No | Yes |

As indicated by the evaluation results shown in Tables 2 to 4, Examples 1 to 10 all exhibited favorable evaluation results.

Comparative Examples 1, 2, 4 and 5 had an index of peel strength of "0", and therefore had a very low peel strength, and resulted in tire separation.

Comparative Example 3 is an example in which the amount of the cresol-formaldehyde condensate exceeds the range of "0.5 to 20 parts by weight per 100 parts by weight of the rubber component", and resulted in tire separation.

Although Comparative Examples 6 and 7 to 9 were evaluated as "No" in the results of the "Tire Separation Test", "Tire Destruction Test" and "Adhesion Test to Metal", these comparative examples had an index of peel strength of "2".

In Comparative Examples 10 and 11, a weight reduction of 10% or more compared to the weight of the charged raw materials was confirmed in the mixing by a Banbury mixer, a reduction in the processing properties due to the adhesion to metal was confirmed.

### Industrial Applicability

A pneumatic tire according to the present invention can suitably be used as an automobile tire. A laminate according to the present invention can suitably be used in the production of a pneumatic tire.

## Claims

1. A laminate of a film of a thermoplastic resin composition and a layer of a rubber composition, wherein the rubber composition comprises
(a) a rubber component,
(b) 0.5 to 20 parts by weight per 100 parts by weight of the rubber component of a condensate of a compound represented by formula (1): 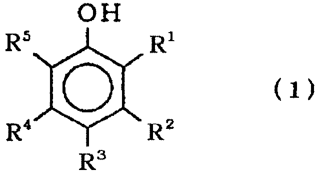 wherein R¹, R², R³, R⁴ and R⁵ are independently selected from hydrogen, a hydroxyl group, alkyl groups having 1 to 8 carbon atoms and ethers having 1 to 8 carbon atoms, with formaldehyde,
(c) 0.25 to 200 parts by weight per 100 parts by weight of the rubber component of a methylene donor,
(d) a vulcanizing agent, and
(e) 0.5 to 5 parts by weight per 100 parts by weight of the rubber component of an unsubstituted or substituted aromatic carboxylic acid having a pKa of 1.5 to 4.0,
wherein a weight ratio of the methylene donor to the condensate is 0.5 to 10.

2. The laminate according to claim 1, wherein the unsubstituted or substituted aromatic carboxylic acid is at least one selected from salicylic acid, 4-aminosalicylic acid, benzoic acid, o-aminobenzoic acid, and 2,4-dihydroxybenzoic acid.

3. The laminate according to claim 1 or 2, wherein the thermoplastic resin composition comprises at least one thermoplastic resin selected from the group consisting of poly(vinyl alcohol), ethylene-vinyl alcohol copolymer, nylon 6, nylon 66, nylon 11, nylon 12, nylon 610, nylon 612, nylon 6/66, nylon MXD6, and nylon 6T.

4. The laminate according to any one of claims 1 to 3, wherein the thermoplastic resin composition further comprises at least one elastomer component selected from the group consisting of brominated isobutylene-p-methylstyrene copolymer, maleic anhydride-modified ethylene-*α*-olefin copolymers, ethylene-glycidyl methacrylate copolymer, and maleic anhydride-modified ethylene-ethyl acrylate copolymer, wherein said at least one elastomer component is dispersed in at least one thermoplastic resin component selected from the group consisting of polyvinyl alcohol, ethylene-vinyl alcohol copolymer, nylon 6, nylon 66, nylon 11, nylon 12, nylon 610, nylon 612, nylon 6/66, nylon MXD6, and nylon 6T.

5. The laminate according to any one of claims 1 to 4, wherein the methylene donor is at least one selected from the group consisting of modified etherified methylolmelamines, paraformaldehyde, hexamethylenetetramine, pentamethylenetetramine, and hexamethoxymethylmelamine.

6. The laminate according to any one of claims 1 to 5, wherein the rubber component is selected from natural rubber, styrene butadiene rubber, or a combination thereof.

7. The laminate according to any one of claims 1 to 6, wherein the condensate is represented by formula (2) : 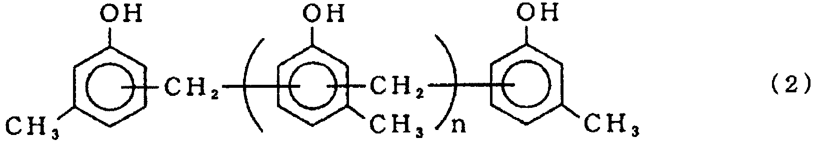 wherein n is an integer of 1 to 20.

8. The laminate according to any one of claims 1 to 6, wherein the condensate is represented by formula (3) : 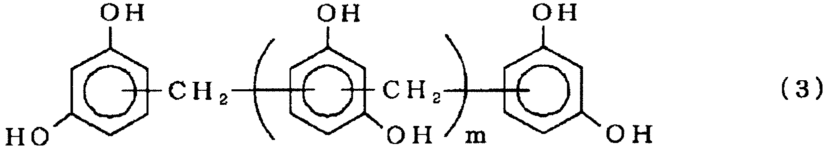 wherein m is an integer of 1 to 20.

9. An inner liner material for pneumatic tire, consisting of the laminate according to any one of claims 1 to 8.

10. A pneumatic tire using as an inner liner material the laminate according to any one of claims 1 to 8.

## Patentansprüche

1. Laminat aus einer Folie aus einer thermoplastischen Harzzusammensetzung und einer Schicht aus einer Kautschukzusammensetzung, wobei die Kautschukzusammensetzung umfasst:
(a) eine Kautschukkomponente,
(b) 0,5 bis 20 Gew.-Teile pro 100 Gew.-Teilen der Kautschukkomponente eines Kondensats aus einer Verbindung der Formel (1): 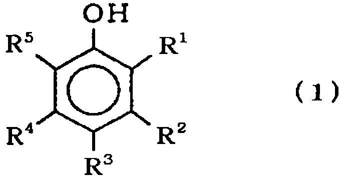 worin R¹, R², R³, R⁴ und R⁵ unabhängig aus Wasserstoff, einer Hydroxylgruppe, Alkylgruppen mit 1 bis 8 Kohlenstoffatomen und Ethern mit 1 bis 8 Kohlenstoffatomen ausgewählt sind, mit Formaldehyd,
(c) 0,25 bis 200 Gew.-Teile pro 100 Gew.-Teilen der Kautschukkomponente eines Methylendonors,
(d) ein Vulkanisationsmittel und
(e) 0,5 bis 5 Gew.-Teile pro 100 Gew.-Teilen der Kautschukkomponente einer unsubstituierten oder substituierten aromatischen Carbonsäure mit einem pKa-Wert von 1,5 bis 4,0,
wobei das Gewichtsverhältnis von Methylendonor zu Kondensat 0,5 bis 10 beträgt.

2. Laminat gemäss Anspruch 1, wobei die unsubstituierte oder substituierte aromatische Carbonsäure zumindest eine, ausgewählt aus Salicylsäure, 4-Aminosalicylsäure, Benzoesäure, o-Aminobenzoesäure und 2,4-Dihydroxybenzoesäure, ist.

3. Laminat gemäss Anspruch 1 oder 2, wobei die thermoplastische Harzzusammensetzung zumindest ein thermoplastisches Harz, ausgewählt aus der Gruppe bestehend aus Poly(vinylalkohol), Ethylen-Vinylalkohol-Copolymer, Nylon 6, Nylon 66, Nylon 11, Nylon 12, Nylon 610, Nylon 612, Nylon 6/66, Nylon MXD6 und Nylon 6T, umfasst.

4. Laminat gemäss irgendeinem der Ansprüche 1 bis 3, wobei die thermoplastische Harzzusammensetzung ferner zumindest eine Elastomerkomponente, ausgewählt aus der Gruppe bestehend aus bromiertem Isobutylen-p-Methylstyrol-Copolymer, Maleinsäureanhydridmodifiziertem Ethylen-α-Olefin-Copolymer, Ethylen-Glycidylmethacrylat-Copolymer und Maleinsäureanhydridmodifiziertem Ethylen-Ethylacrylat-Copolymer, umfasst, wobei die zumindest eine Elastomerkomponente in zumindest einer thermoplastischen Harzkomponente, ausgewählt aus der Gruppe bestehend aus Polyvinylalkohol, Ethylen-Vinylalkohol-Copolymer, Nylon 6, Nylon 66, Nylon 11, Nylon 12, Nylon 610, Nylon 612, Nylon 6/66, Nylon MXD6 und Nylon 6T, dispergiert ist.

5. Laminat gemäss irgendeinem der Ansprüche 1 bis 4, wobei der Methylendonor zumindest einer, ausgewählt aus der Gruppe bestehend aus modifizierten veretherten Methylolmelaminen, Paraformaldehyd, Hexamethylentetramin, Pentamethylentetramin und Hexamethoxymethylmelamin, ist.

6. Laminat gemäss irgendeinem der Ansprüche 1 bis 5, wobei die Kautschukkomponente aus Naturkautschuk, StyrolButadien-Kautschuk oder einer Kombination davon ausgewählt ist.

7. Laminat gemäss irgendeinem der Ansprüche 1 bis 6, wobei das Kondensat durch die Formel (2) dargestellt ist: 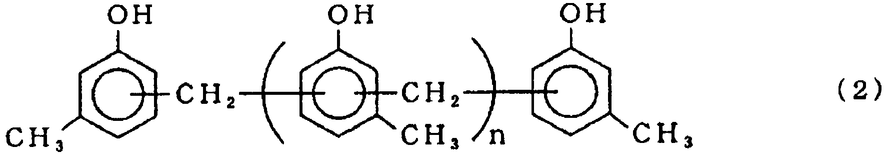 worin n eine ganze Zahl von 1 bis 20 ist.

8. Laminat gemäss irgendeinem der Ansprüche 1 bis 6, wobei das Kondensat durch die Formel (3) dargestellt ist: 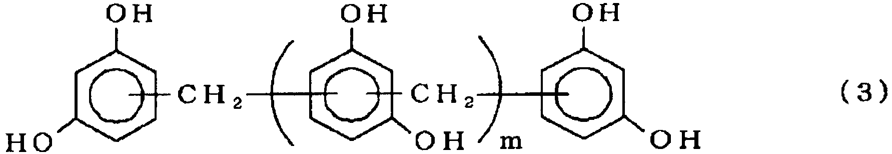 worin m eine ganze Zahl von 1 bis 20 ist.

9. Innenauskleidungsmaterial für Luftreifen, bestehend aus einem Laminat gemäss irgendeinem der Ansprüche 1 bis 8.

10. Luftreifen, der als Innenauskleidungsmaterial ein Laminat gemäss irgendeinem der Ansprüche 1 bis 8 verwendet.

## Revendications

1. Stratifié d'un film d'une composition de résine thermoplastique et d'une couche de composition de caoutchouc, dans lequel la composition de caoutchouc comprend :
(a) un composant de caoutchouc,
(b) 0,5 à 20 parties en poids pour 100 parties en poids du composant de caoutchouc d'un condensat d'un composé représenté par la formule (1) : 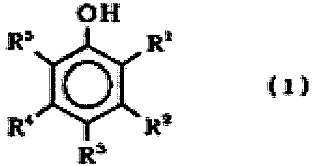 dans laquelle R¹, R², R³, R⁴ et R⁵ sont choisis indépendamment parmi l'hydrogène, un groupe hydroxyle, des groupes alkyle ayant 1 à 8 atomes de carbone et des éthers ayant 1 à 8 atomes de carbone,
avec le formaldéhyde,
(c) 0,25 à 200 parties en poids pour 100 parties en poids du composant de caoutchouc d'un groupe donneur méthylène,
(d) un agent de vulcanisation, et
(e) 0,5 à 5 parties en poids pour 100 parties en poids du composant de caoutchouc d'un acide carboxylique aromatique non substitué ou substitué ayant un pKa de 1,5 à 4,0,
où un rapport en poids du groupe donneur méthylène au condensat est de 0,5 à 10.

2. Stratifié selon la revendication 1, dans lequel l'acide carboxylique aromatique non substitué ou substitué est au moins l'un choisi parmi l'acide salicylique, l'acide 4-aminosalicylique, l'acide benzoïque, l'acide *o*-amino-benzoïque et l'acide 2,4-dihydroxybenzoïque.

3. Stratifié selon la revendication 1 ou 2, dans lequel la composition de résine thermoplastique comprend au moins une résine thermoplastique choisie dans le groupe constitué par le poly(alcool vinylique), le copolymère éthylène-alcool vinylique, le Nylon 6, le Nylon 66, le Nylon 11, le Nylon 12, le Nylon 610, le Nylon 612, le Nylon 6/66, le Nylon MXD6 et le Nylon 6T.

4. Stratifié selon l'une quelconque des revendications 1 à 3, dans lequel la composition de résine thermoplastique comprend en outre au moins un composant élastomère choisi dans le groupe constitué par le copolymère isobutylène bromé-*p*-méthylstyrène, des copolymères éthylène modifié par l'anhydride maléique-*α*-oléfine, le copolymère éthylène-méthacrylate de glycidyle et le copolymère éthylène modifié par l'anhydride maléique-acrylate d'éthyle, où ledit au moins un composant élastomère est dispersé dans au moins un composant de résine thermoplastique choisi dans le groupe constitué par l'alcool polyvinylique, le copolymère éthylène-alcool vinylique, le Nylon 6, le Nylon 66, le Nylon 11, le Nylon 12, le Nylon 610, le Nylon 612, le Nylon 6/66, le Nylon MDX6 et le Nylon 6T.

5. Stratifié selon l'une quelconque des revendications 1 à 4, dans lequel le groupe donneur méthylène est au moins l'un choisi dans le groupe constitué par des méthylol-mélamines éthérifiées modifiées, le paraformaldéhyde, l'hexaméthylènetétramine, la pentaméthylènetétramine et l'hexaméthoxyméthylmélamine.

6. Stratifié selon l'une quelconque des revendications 1 à 5, dans lequel le composant de caoutchouc est choisi parmi le caoutchouc naturel, le caoutchouc styrène butadiène ou une de leurs combinaisons.

7. Stratifié selon l'une quelconque des revendications 1 à 6, dans lequel le condensat est représenté par la formule (2) : 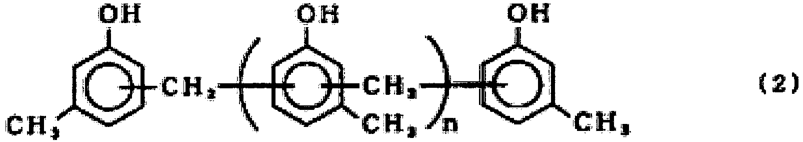 dans laquelle n est un nombre entier de 1 à 20.

8. Stratifié selon l'une quelconque des revendications 1 à 6, dans lequel le condensat est représenté par la formule (3) : 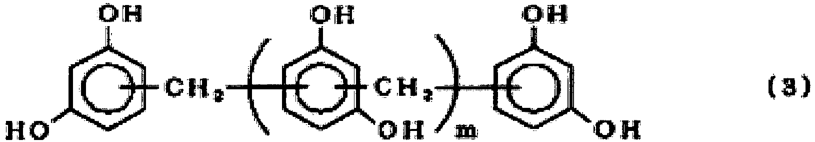 dans laquelle m est un nombre entier de 1 à 20.

9. Matériau de calandrage interne pour pneumatique, constitué du stratifié selon l'une quelconque des revendications 1 à 8.

10. Pneumatique utilisant comme matériau de calandrage interne le stratifié selon l'une quelconque des revendications 1 à 8.
